(19) Europäisches Patentamt / European Patent Office / Office européen des brevets

(11) **EP 4 737 855 A1**

(12) **EUROPEAN PATENT APPLICATION**
published in accordance with Art. 153(4) EPC

(43) Date of publication:
**06.05.2026 Bulletin 2026/19**

(51) International Patent Classification (IPC):
**G01C 21/00** (2006.01)   **G01C 21/16** (2006.01)
**G01C 21/20** (2006.01)

(21) Application number: **24825151.4**

(22) Date of filing: **05.06.2024**

(86) International application number:
**PCT/CN2024/097469**

(87) International publication number:
**WO 2024/260255 (26.12.2024 Gazette 2024/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.06.2023   CN 202310749631**

(71) Applicant: **Yosemite Shanghai Robotics Co., Ltd
Shanghai 200233 (CN)**

(72) Inventors:
• **SU, Hans**
  **Shanghai 200233 (CN)**

• **LI, Jack**
  **Shanghai 200233 (CN)**
• **GU, Jeff**
  **Shanghai 200233 (CN)**
• **ZHAO, Xun**
  **Shanghai 200233 (CN)**
• **FAN, Wolory**
  **Shanghai 200233 (CN)**
• **REN, Sunny**
  **Shanghai 200233 (CN)**

(74) Representative: **JWP Patent & Trademark
Attorneys
ul. Minska 75
03-828 Warszawa (PL)**

(54) **MOWING ROBOT POSITIONING METHOD AND APPARATUS, AND ELECTRONIC DEVICE AND READABLE STORAGE MEDIUM**

(57)     Embodiments of the present disclosure provide a method for localizing a lawnmower robot, an apparatus, and an electronic device and a readable storage medium. In the method according to the embodiments, during the operation of the lawnmower robot, corresponding data is acquired by a wheel speedometer, an inertial positioning device, and an image sensing device disposed on the lawnmower robot; the acquired wheel speedometer data is analyzed to derive a first residual term, the inertial positioning data is analyzed to derive a second residual term, and the image data is analyzed to determine a third residual term; and a cost function is constructed based on the first, second, and third residual terms, and the current position information of the lawnmower robot is obtained by minimizing the cost function. By tightly coupling the data collected from multiple sensors in the manner described above, the present disclosure is advantageous for improving the accuracy of localization results of the lawnmower robot.

FIG. 2

EP 4 737 855 A1

**Description**

This application is based upon and claims priority to Chinese Patent Application No. 2023107496312, filed before China National Intellectual Property Administration on June 21, 2023 and entitled "METHOD AND APPARATUS FOR LOCALIZING LAWNMOWER ROBOT, AND ELECTRONIC DEVICE AND READABLE STORAGE MEDIUM," the entire contents of which are incorporated herein by reference.

**TECHNICAL FIELD**

The present disclosure relates to the technical field of lawnmower robots, and in particular, relates to a method and apparatus for localizing a lawnmower robot, and an electronic device and a readable storage medium therefor.

**BACKGROUND**

A lawnmower robot is an integrated robotic system that combines multiple functions such as environment perception, dynamic path planning, and behavior control, liberating users from the laborious tasks of lawn maintenance. Accurate localization is critical for the lawnmower robot in various scenarios, such as planning an operating path while performing lawn maintenance within a defined area, and automatically returning to a charging dock to recharge. Therefore, accurate localization is of extreme importance to the lawnmower robot.

Conventionally, a lawnmower robot acquires satellite positioning signals from a mobile station. These satellite positioning signals are then verified using verification data from a real-time kinematic (RTK) base station to obtain a final localization result. However, factors such as signal obstruction by buildings and atmospheric interference can affect the satellite positioning signals. This may cause localization drift in the lawnmower robot, resulting in poor localization accuracy.

**SUMMARY**

In view of the above, embodiments of the present disclosure provide a method and apparatus for localizing lawnmower robot, and an electronic device and a computer-readable storage medium therefor, which improve the accuracy of localization of the lawnmower robot.

In a first aspect of the embodiments of the present disclosure, a method for localizing a lawnmower robot is provided. The method includes: acquiring wheel speedometer data and inertial positioning data of the lawnmower robot, and image data captured by an image sensing device disposed on the lawnmower robot; deriving a first residual term based on the wheel speedometer data; deriving a second residual term based on the inertial positioning data; calculating a visual reprojection error based on the image data, and deriving a third residual term based on the visual reprojection error; and constructing a cost function based on the first residual term, the second residual term, and the third residual term, and determining current position information of the lawnmower robot by minimizing the cost function.

In some embodiments, the constructing the cost function based on the first residual term, the second residual term, and the third residual term, and determining the current position information of the lawnmower robot by minimizing the cost function include: determining a first weight, a second weight, and a third weight, wherein the first weight is related to the wheel speedometer data, the second weight is related to the inertial positioning data, and the third weight is related to the image data; deriving a first data term based on the first residual term and the first weight, deriving a second data term based on the second residual term and the second weight, and deriving a third data term based on the third residual term and the third weight; and summing the first data term, the second data term, and the third data term to obtain the cost function.

In some embodiments, the deriving the first residual term based on the wheel speedometer data includes: integrating the wheel speedometer data to obtain first position information; and deriving the first residual term based on the first position information and an initial position estimate.

In some embodiments, the deriving the second residual term based on the inertial positioning data includes: pre-integrating the inertial positioning data to obtain second position information; and deriving the second residual term based on the second position information and an initial position estimate.

In some embodiments, the calculating the visual reprojection error based on the image data, and the deriving the third residual term based on the visual reprojection error include: performing image recognition on the image data to identify an image containing a reference landmark and to determine an actual pixel position of the reference landmark in the image, wherein the reference landmark is a reference object within an operating area of the lawnmower robot; determining an estimated pixel position of the reference landmark in the image, and deriving the visual reprojection error based on the estimated pixel position and the actual pixel position; and determining the visual reprojection error as the third residual term.

In some embodiments, before constructing the cost function based on the first residual term, the second residual term, and the third residual term, the method further includes: acquiring a marginalized residual term; wherein constructing the cost function based on the first residual term, the second residual term, and the third residual term includes: constructing the cost function based on the first residual term, the second residual term, the third residual term, and the marginalized residual term.

In some embodiments, the determining the first weight, the second weight, and the third weight includes: determining the first weight based on a noise covariance corresponding to a wheel speedometer of the lawnmower robot; determining the second weight based on a covariance of a pre-integration noise term of the inertial positioning data; and determining the third weight based on a noise covariance corresponding to the image sensing device on the lawnmower robot.

In a second aspect of the embodiments of the present disclosure, an apparatus for localizing a lawnmower robot is provided. The apparatus includes: a data acquiring module, configured to acquire wheel speedometer data and inertial positioning data of the lawnmower robot, and image data captured by an image sensing device disposed on the lawnmower robot; a residual calculating module, configured to: derive a first residual term based on the wheel speedometer data; derive a second residual term based on the inertial positioning data; and calculate a visual reprojection error based on the image data and derive a third residual term based on the visual reprojection error; and a position determining module, configured to construct a cost function based on the first residual term, the second residual term, and the third residual term, and to determine current position information of the lawnmower robot by minimizing the cost function.

In a third aspect of the embodiments of the present disclosure, a computer storage medium is provided. The computer storage medium stores at least one executable instruction. The at least one executable instruction, when executed by a processor, causes the processor to perform the method for localizing a lawnmower robot according to the first aspect.

In a fourth aspect of embodiments of the present disclosure, an electronic device is provided. The electronic device includes a memory and a processor.

The memory is configured to store at least one computer program instruction. The processor is configured to run the at least one program instruction to cause the electronic device to perform the method for localizing a lawnmower robot according to the first aspect.

In a fifth aspect of the embodiments of the present disclosure, a computer program product is provided. The computer program product includes at least one computer program instruction. The at least one computer program instruction, when executed by an electronic device, causes the electronic device to perform the method for localizing a lawnmower robot according to the first aspect.

The embodiments of the present disclosure provide a method for localizing a lawnmower robot, an apparatus, and an electronic device and a readable storage medium therefor. In the method according to the embodiments, during the operation of the lawnmower robot, corresponding data is acquired by a wheel speedometer, an inertial positioning device, and an image sensing device disposed on the lawnmower robot; the acquired wheel speedometer data is analyzed to derive a first residual term, the inertial positioning data is analyzed to derive a second residual term, and the image data is analyzed to determine a third residual term; and a cost function is constructed based on the first, second, and third residual terms, and the current position information of the lawnmower robot is obtained by minimizing the cost function. By tightly coupling the data collected from multiple sensors in the manner described above, the present disclosure is advantageous for improving the accuracy of localization results of the lawnmower robot.

The above description only summarizes the technical solutions according to the embodiments of the present disclosure. Specific embodiments of the present disclosure are described hereinafter to better and clearer understand the technical solutions of the embodiments of the present disclosure, to practice the technical solutions based on the disclosure of the specification and to make the above and other objectives, features and advantages of the embodiments of the present disclosure more apparent and understandable.

**BRIEF DESCRIPTION OF THE DRAWINGS**

For clearer descriptions of technical solutions according to the embodiments of the present disclosure, drawings that are to be referred for description of the embodiments are briefly described hereinafter. Apparently, the drawings described hereinafter merely illustrate some embodiments of the present disclosure. Persons of ordinary skill in the art may also derive other drawings based on the drawings described herein without any creative effort.

FIG. 1 is a schematic structural diagram of a lawnmower robot according to some embodiments of the present disclosure.

FIG. 2 is a schematic flowchart of a method for localizing a lawnmower robot according to some embodiments of the present disclosure.

FIG. 3 is a schematic flowchart of a method for localizing a lawnmower robot according to some embodiments of the present disclosure.

FIG. 4 is a schematic structural diagram of an apparatus for localizing a lawnmower robot some embodiments of the present disclosure.

## DETAILED DESCRIPTION

For clearer descriptions of the objectives, technical solutions, and advantages of the embodiments of the present disclosure, the following clearly and completely describes the technical solutions in the embodiments of the present disclosure with reference to the accompanying drawings in the embodiments of the present disclosure. Apparently, the described embodiments are merely a part rather than all of the embodiments of the present disclosure. All other embodiments obtained by a person of ordinary skill in the art based on the embodiments of the present disclosure without creative efforts shall fall within the protection scope of the present disclosure.

The term "and/or" in the present disclosure is merely an association relationship for describing associated objects, which represents that there may exist three types of relationships. For example, the phrase "A and/or B" may indicate (A), (B), or (A and B). In addition, the forward-slash symbol "/" generally represents an "or" relationship between associated objects before and after the symbol. In addition, terms such as "first," "second," and the like in the specifications, claims and the accompanying drawings of the present disclosure are intended to distinguish different objects but are not intended to define a specific sequence. Such terms may explicitly or implicitly indicate one or more such features.

For better understanding of the technical solutions according to the embodiments of the present disclosure, the technical solutions of the present disclosure are clearly and completely described with reference to the accompanying drawings of the embodiments of the present disclosure.

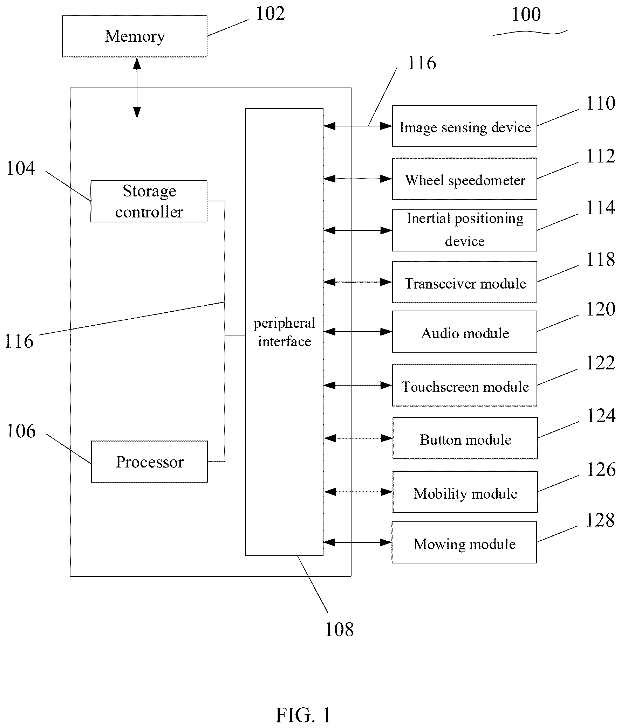

FIG. 1 is a schematic structural diagram of a lawnmower robot 100 according to some embodiments of the present disclosure. As illustrated in FIG. 1, the lawnmower robot 100 includes a memory 102, a memory controller 104, one or more processors 106 (only one is illustrated), a peripheral interface 108, an image sensing device 110, a wheel speedometer 112, and an inertial positioning device 114. These components or elements are in communication with each other via one or more communication buses/signal cables 116.

The memory 102 may be used to store software programs and modules, for example, computer program instructions or modules corresponding to a method for localizing the lawnmower robot and apparatus according to some embodiments of the present disclosure, the one or more processors 106 executes various functional applications and data processing, that is implementing the method for localizing the lawnmower robot according to some embodiments of the present disclosure, by running or executing a computer program stored in the memory 102.

The memory 102 may include a high-speed random access memory, further includes non-volatile memory or a volatile memory, for example, one or more magnetic disk storage apparatuses, a flash device, or another non-volatile solid-state storage device, for example, a flash memory, a hard disk, a multimedia card, a card memory (for example, an SD memory or a DX memory), a random access memory (RAM), a read-only memory (ROM), an erasable programmable read-only memory (EPROM), an electrically erasable programmable read-only memory (EEPROM), a programmable read-only memory (PROM), a magnetic memory, a magnetic disk, an optical disc, and the like. The RAM may include a static random access memory (SRAM) or a dynamic random access memory (DRAM). In some embodiments, the memory 102 may be an internal storage unit of the lawnmower robot 100, for example, a hard disk or a memory of the lawnmower robot 100. In other embodiments, the memory 102 also may be an External storage unit of the lawnmower robot 100, for example, a plug-in hard disk configured to the lawnmower robot 100, a smart media card (SMC), a secure digital (SD) card or a flash card, and the like. In some embodiments, the memory 102 also may further include a memory that is remotely located relative to the lawnmower robot 100, and the memory that is remotely located may be communicated with the lawnmower robot 100 by a network. The network includes, but is not limited to, the Internet, intranets, local area networks, mobile communication networks, and combinations thereof. The processor 106 and other potential components, under controlled by the supervision of storage controller 104, may access the memory 102.

The peripheral interface 108 may be configured to couple various input/various input devices to the processor 106 and the memory 102. The processor 106 runs various software or instructions to perform various functions and data processing of the lawnmower robot 100.

In some embodiments, the peripheral interface 108, the processor 106, and the memory controller 104 may be implemented by a single chip. In other embodiments, the peripheral interface 108, the processor 106, and the memory controller 104 may be implemented by different chips respectively.

In some embodiments of the present disclosure, the processor 106 may be a central processing unit (CPU), a controller, a microcontroller, a microprocessor, or other data processing chips. The processor 106 also may be another general-purpose processor, a digital signal processor (DSP), an application-specific integrated circuit (ASIC), a field programmable gate array (FPGA) or another programmable logic device, a discrete gate or a transistor logic device, a discrete hardware component, or the like. The general-purpose processor may be a microprocessor, any conventional processor, for example, a single-chip microcomputer, or the like.

The image sensing device 110 is configured to capture image data during operation of the lawnmower robot 100. The image sensing device 110 may be, but is not limited to, a camera, a light detection and ranging (LiDAR) device, or the like. The image data captured by the image sensing device 110 may be stored in the memory 102, and the processor 106 reads the image data from the memory 102 to perform localization of the lawnmower robot.

The wheel speedometer 112 is configured to acquire data such as wheel speed (i.e., linear velocity), timestamps, angular velocity, and heading angle of wheels of the lawnmower robot as wheel speedometer data during the operation of the lawnmower robot 100. The wheel speedometer data captured by the wheel speedometer 112 may be stored in the memory 102, and the processor 106 reads the wheel speedometer data from the memory 102 to perform localization of the lawnmower robot. One or more wheel speedometers 112 may be disposed on the lawnmower robot 100. For example, a wheel speedometer may be disposed on each of the four wheels: front-left wheel, front-right wheel, rear-left wheel, and rear-right wheel. Alternatively, wheel speedometers may be disposed on only some of the wheels, such as on the front-left and front-right wheels, or on the rear-left and rear-right wheels respectively. The wheel speedometer 112 may be a Hall-effect wheel speed sensor or a magneto-electric wheel speed sensor, which is not limited in the present disclosure. The wheel speedometer may also be referred to as, for example, a wheel encoder or an odometer.

The inertial positioning device 114 may be an inertial measurement unit (IMU) or an inertial navigation system (INS). The IMU is capable of acquiring inertial positioning data such as the acceleration, angular velocity, and timestamps of the lawnmower robot, and storing the inertial positioning data in the memory 102. The INS is capable of acquiring data such as the acceleration and attitude of the lawnmower robot, and directly outputting the position information of the lawnmower robot by calculation.

In the present disclosure, the processor 106 is specifically configured to tightly couple the data respectively captured by the image sensing device 110, the wheel speedometer 112, and the inertial positioning device 114, such that the current position of the lawnmower robot 100 is determined.

Based on the embodiment illustrated in FIG. 1, the lawnmower robot 100 may further include a transceiver module 118, an audio module 120, a touchscreen module 122, a button module 124, a mobility module 126, a mowing module 128, and the like. The transceiver module 118 may be a radio frequency (RF) module, configured to receive and transmit electromagnetic waves and to perform relevant conversions between electromagnetic waves and electrical signals, thereby communicating with a communication network or other devices. For example, the transceiver module 118 may transmit the data respectively captured by the image sensing device 110, the wheel speedometer 112, and the inertial positioning device 114 within a period of time, as well as the current position of the lawnmower robot determined by the processor 106, to a server or to a terminal device (such as a smartphone) paired with the lawnmower robot. The audio module 120 is configured to acquire audio data, play audio data, and the like. The touchscreen module 122 provides an output and an input interface for interacting between the lawnmower robot 100 and a user, to facilitate the user in inputting control commands to the lawnmower robot 100. The button module 124 further provides an interface for the user to provide input to the lawnmower robot 100. The user may press different buttons to cause the lawnmower robot 100 to implement different functions. The mobility module 126 is configured to perform movement operations of the lawnmower robot 100. The mobility module 126 includes at least wheels and a wheel drive structure. The wheels include a left wheel and a right wheel. The mowing module 128 is configured to perform mowing operations. The mowing module 128 includes at least a blade disc and a blade disc drive structure. It should be understood that the structure illustrated in FIG. 1 is merely exemplary. The lawnmower robot 100 may include more or fewer components than those illustrated in FIG. 1, or have a different configuration from that illustrated in FIG. 1. The components illustrated in FIG. 1 may be implemented by hardware, software, or a combination thereof.

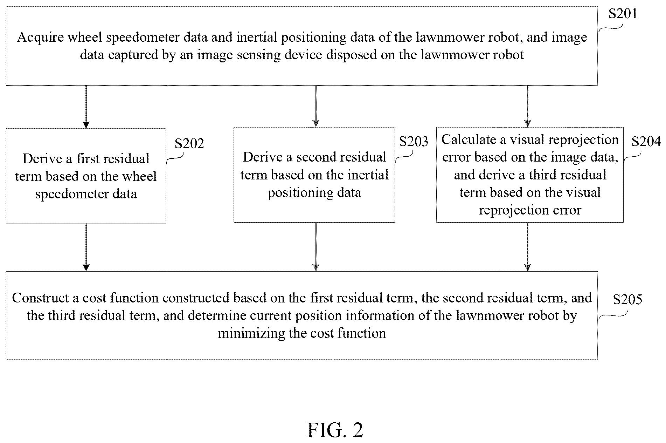

FIG. 2 is a schematic flowchart of a method for localizing a lawnmower robot according to some embodiments of the present disclosure. In the embodiments, a localization apparatus for a lawnmower robot (hereinafter referred to as a localization apparatus) is used as an example for illustration. Referring to FIG. 2, the method includes the following steps.

In S201, wheel speedometer data and inertial positioning data of the lawnmower robot, and image data captured by an image sensing device disposed on the lawnmower robot are acquired.

During the process where the lawnmower robot operates within a prescribed operating area, the wheel speedometer, the inertial positioning device, and the image sensing device each continuously capture data and store the data in a memory of the lawnmower robot. The data capture frequencies of the wheel speedometer, the inertial positioning device, and the image sensing device may differ.

The wheel speedometer data may include timestamps of data capture, the wheel speed of wheels, heading angle, and angular velocity of the lawnmower robot. The inertial positioning data may include data such as acceleration and attitude angle of the lawnmower robot, and data capture timestamps acquired by an IMU; or may include position information of the lawnmower robot and data capture timestamps acquired by an INS.

In some embodiments, the localization apparatus employs a sliding time window, which is an optimization approach, for localizing the lawnmower robot. Therefore, the localization apparatus analyzes and calculates the wheel speedometer data, the inertial positioning data, and the image data within the sliding time window to obtain the current position information of the lawnmower robot. The localization apparatus may periodically localize the lawnmower robot, where one localization cycle may serve as one sliding time window. Alternatively, the time range of the sliding time window may be determined based on a number of frames of image data; for example, a time range corresponding to 10 consecutive image frames serves as one sliding time window. The manner of determining the sliding time window is not limited in the present disclosure.

Furthermore, because the data capture frequencies of the wheel speedometer, the inertial positioning device, and the image sensing device may differ, the timestamps of each image frame within the sliding time window may be used as a reference to determine each time instant within the sliding time window.

In S202, a first residual term is derived based on the wheel speedometer data.

The localization apparatus may read the wheel speedometer data within the sliding time window from the memory and perform an integration calculation on the wheel speedometer data to obtain first position information at each time instant within the sliding time window. Then, for each time instant within the sliding time window, the first residual term for the time instant is derived based on an error between the first position information and a corresponding initial position estimate at the time instant.

The initial position estimate is an initial system state variable and may include a preestimated position of the lawnmower robot for each respective time instant within the sliding time window. The initial position estimate may be, but is not limited to, being calculated from the inertial positioning data.

The first position information may include coordinate values of the lawnmower robot in a designated coordinate system; similarly, the initial position estimate may include estimated coordinate values of the lawnmower robot in the designated coordinate system. The starting position of the lawnmower robot for the current lawn maintenance task may be defined as the origin of the designated coordinate system, with the direction of movement of the lawnmower robot as the horizontal axis and the direction perpendicular to its direction of movement as the vertical axis.

The error between the first position information and the initial position estimate may be derived using, but not limited to, a Mahalanobis distance.

In S203, a second residual term is derived based on the inertial positioning data.

The localization apparatus may read the inertial positioning data within the sliding time window from the memory. In a case where the inertial positioning data is IMU data, the localization apparatus may perform a pre-integration process on inertial positioning data between any two adjacent time instants within the sliding time window to obtain second position information at each time instant. The pre-integration process resolves the relative pose between two adjacent frames of data without needing to re-integrate all IMU data, which reduces the computational load and improves localization efficiency. In a case where the inertial positioning data is INS data, the localization apparatus may directly obtain the second position information of the lawnmower robot at each time instant within the sliding time window from the memory.

Then, for each time instant within the sliding time window, the second residual term for the time instant is derived by calculating an error between the second position information and the initial position estimate at the time instant, that is, each second residual term for each time instant is derived. The error between the second position information and the initial position estimate may be derived using, but not limited to, a Mahalanobis distance.

In S204, a visual reprojection error is calculated based on the image data, and deriving a third residual term based on the visual reprojection error.

The visual reprojection error refers to the difference between the projection of a 3D point of the real world onto an image plane (i.e., a pixel point in the image) and its reprojection. Herein, reprojection refers to a second projection. The first projection refers to the projection of a 3D point onto the image when the image sensing device captures image data, that is, a 3D point in a world coordinate system is mapped to an image coordinate system (also referred to as a camera coordinate system) corresponding to the image sensing device, and then converted to a pixel coordinate system to obtain pixel coordinates. Based on the pixel coordinates of some feature points in the image, the coordinates of a 3D point (which is not physically real) may be derived by reverse calculation using geometric information, and a coordinate transformation relationship from the 3D point to the pixel point may also be obtained. Reprojection refers to the second projection, where the calculated virtual 3D point and the coordinate transformation relationship are used to project the point again. The difference between the pixel points obtained from the two projection processes is the visual reprojection error.

Within the operating area of the lawnmower robot, a plurality of dedicated reference landmarks for localization may be predefined. These reference landmarks may be placed as close to the edge of the operating area as possible, or in locations where lawn maintenance is not required, to minimize their impact on the lawnmower robot. Alternatively, a reference landmark may also be an existing object within the operating area of the lawnmower robot, which is not limited in the present disclosure. The image data captured by the image sensor may include pixel points corresponding to one or more reference landmarks. In the present disclosure, the reference landmarks are used as feature points in 3D space for calculating the visual reprojection error.

The visual reprojection error may be determined by the following steps.

First, the localization apparatus may read the image data within a sliding time window from the memory. The image data includes a plurality of image frames. The localization apparatus then performs image recognition on the image data to determine whether an image contains a reference landmark and to determine an actual pixel position of the reference landmark in the image. The localization apparatus may perform the image recognition using an image recognition model, such as but not limited to, a deep neural network model or a convolutional network model. Exemplarily, the image recognition model may process an input image to extract Harris corners, track adjacent frames using pyramidal Lucas-Kanade optical flow, and remove outliers using RANSAC, such that the reference landmark in the image and its actual pixel position are identified.

Next, the visual reprojection error is calculated based on the pixel point of the reference landmark in its corresponding image. Based on the capture time of the images and the landmarks, images containing the same reference landmark may be grouped into a common image set. Then, for a given reference landmark, coordinates thereof are transformed from the camera coordinate system of first observation thereof to the camera coordinate system of the current time instant to obtain an estimated pixel position. The error between the estimated pixel position and the actual pixel position is then calculated to obtain the visual reprojection error. The visual reprojection error is then the third residual term. The error between the estimated pixel position and the actual pixel position may be calculated using, but is not limited to, a Mahalanobis distance.

It should be noted that a single image frame may contain a plurality of reference landmarks; and therefore, one image frame may be assigned to image sets corresponding to different reference landmarks.

It should also be noted that the execution order of step S202 and step S204 is not fixed. In this embodiment, these steps are exemplified as being performed in parallel.

In S205, a cost function is constructed based on the first residual term, the second residual term, and the third residual term, and current position information of the lawnmower robot is determined by minimizing the cost function.

A cost function is a function that maps the value of a random event or its associated random variable to a non-negative real number to represent the "risk" or "loss" of that random event. In application, a solution is often found by minimizing the loss function. In the present disclosure, a cost function is constructed by fusing the first residual term (from wheel speedometer and inertial data) and the second residual term (from image data), and the current position information of the lawnmower robot is solved for by minimizing the cost function.

The cost function may be constructed as follows:

First, a first weight, a second weight, and a third weight are determined. The first weight is related to the wheel speedometer data, the second weight is related to the inertial positioning data, and the third weight is related to the image data. In some embodiments, the first weight may be determined based on a noise covariance corresponding to the wheel speedometer of the lawnmower robot. The second weight may be determined based on a covariance of a pre-integration noise term of the inertial positioning data acquired by the inertial positioning device. The third weight may be determined based on a noise covariance corresponding to the image sensing device on the lawnmower robot. The first weight, the second weight, and the third weight may be the inverses of the corresponding covariances. The first weight and the third weight may be obtained from calibration data during a prior calibration of the wheel speedometer and the image sensing device on the lawnmower robot, and stored in the memory of the lawnmower robot.

The larger the covariance, the less reliable the corresponding observation data is. Therefore, since the weight is the inverse of the covariance, a larger weight indicates that the corresponding observation data is more reliable. For example, a larger first weight indicates that the wheel speedometer observation is more reliable. A larger second weight indicates that the inertial positioning device observation is more reliable. A larger third weight indicates that the image observation is more reliable.

Next, a first data term is obtained by fusing the first weight with the first residual term; a second data term is obtained by fusing the second weight with the second residual term; and a third data term is obtained by fusing the third weight with the third residual term. The cost function is then obtained by summing the first data term, the second data term, and the third data term.

The fusion of a weight and a residual term may be implemented by multiplication. For example, the first data term is obtained by multiplying the first weight by the first residual term for each time instant in the sliding time window and then summing the results. The second data term is obtained by multiplying the second weight by the second residual term for each time instant in the sliding time window and then summing the results. The third data term is obtained by multiplying the third weight by the reprojection error corresponding to each image in which a reference landmark is observed and then summing the results.

Exemplarily, the cost function may be represented by Formula (1):

$$c(x) = \sum_{k=0}^{K-2} e_p^{k^T} W_p e_p^k + \sum_{k=0}^{K-2} e_s^{k^T} W_s e_s^k + \sum_{l} \sum_{j \in \beta_l} e_r^{l,j^T} W_r e_r^{l,j} \qquad \text{Formula (1)}$$

In Formula (1), $c(x)$ represents the cost function; $e_p^k$ represents the first residual term corresponding to the $k$

image frame in the sliding time window; $W_p$ represents the first weight; $K$ represents the total number of image frames in the sliding time window; $T$ represents transpose; $e_s^k$ represents the second residual term corresponding to the $k$ image frame in the sliding time window; $W_s$ represents the second weight; $e_r^{l,j}$ represents the visual reprojection error of the reference landmark $l$ in the $j$ image frame, i.e., the third residual term; $\beta_l$ represents the set of images in which the reference landmark $l$ appears; and $W_r$ represents the third weight.

By minimizing the cost function, a system state vector $x$ may be solved for. The system state vector $x$ may include the states of all image sensing devices within the sliding time window (including position, orientation, velocity, accelerometer bias, and gyroscope bias), extrinsic parameters from the image sensing device to the inertial positioning device, and the inverse depth of certain feature points. Position estimate information for the lawnmower robot may be obtained by integrating elements of the system state vector $x$, and the position estimate information is determined as the current position information of the lawnmower robot. The process of minimizing the cost function is similar to conventional methods for solving cost functions and may be implemented using any conventional method, which is not limited in the present disclosure.

In the method according to the embodiments, during the operation of the lawnmower robot, corresponding data is acquired by a wheel speedometer, an inertial positioning device, and an image sensing device disposed on the lawnmower robot; the acquired wheel speedometer data is analyzed to derive a first residual term, the inertial positioning data is analyzed to derive a second residual term, and the image data is analyzed to determine a third residual term; and a cost function is constructed based on the first, second, and third residual terms, and the current position information of the lawnmower robot is obtained by minimizing the cost function. By tightly coupling the data collected from multiple sensors in the manner described above, the present disclosure is advantageous for improving the accuracy of localization results of the lawnmower robot.

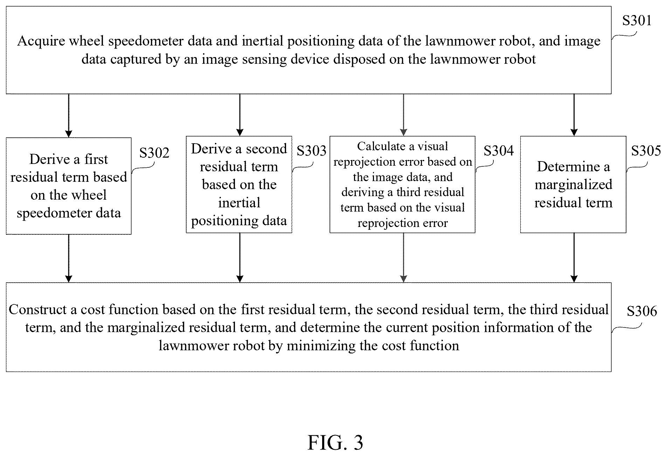

FIG. 3 is a schematic flowchart of a method for localizing a lawnmower robot according to some embodiments of the present disclosure. Referring to FIG. 3, the method includes the following steps.

In S301, wheel speedometer data and inertial positioning data of the lawnmower robot, and image data captured by an image sensing device disposed on the lawnmower robot are acquired.

In S302, a first residual term is derived based on the wheel speedometer data.

In S303, a second residual term is derived based on the inertial positioning data.

In S304, a visual reprojection error is calculated based on the image data, and a third residual term is derived based on the visual reprojection error.

Steps S301 to S304 in the embodiments are similar to steps S201 to S204 in the embodiments illustrated in FIG. 2 respectively. For details, reference may be made to the detailed description of the embodiments illustrated in FIG. 2, which is not described herein any further for brevity.

In S305, a marginalized residual term is determined.

The object of marginalization is the oldest frame or the second-newest frame in the sliding time window, whereby some older image frames or frames that do not meet specific criteria are removed from the sliding time window. The purpose of marginalization is to avoid calculating the visual reprojection errors corresponding to reference landmarks in these frames that are to be removed, while still retaining the constraints that these frames impose on other frames within the sliding time window.

The localization apparatus may determine whether or not the second-newest frame within the sliding time window is a keyframe. In a case where the second-newest frame is a keyframe, the oldest frame in the sliding time window is marginalized out, along with its observed reference landmarks and associated inertial positioning data, and the second-newest frame is converted into a prior term that is added to the overall cost function. In a case where the second-newest frame is not a keyframe, the second-newest frame and its visual observation edges are discarded, but its inertial positioning data is retained. Through the process described above, the prior term is constructed. During optimizing the system state variables within the sliding time window, that is, when performing the localization of the lawnmower robot, the prior term is added to the cost function as the marginalized residual term for joint optimization. This process yields a latest state estimate result without losing historical information. The prior term may be constructed using the Schur complement.

Marginalization may also be implemented using other strategies, which is not limited in the present disclosure.

It should be noted that the execution order of steps S302, S303, S304, and S305 is not fixed.

In S306, a cost function is constructed based on the first residual term, the second residual term, the third residual term, and the marginalized residual term, and the current position information of the lawnmower robot is determined by minimizing the cost function.

For the implementation of determining the first data term based on the first residual term, the second data term based on the second residual term, and the third data term based on the third residual term, reference may be made to the detailed description of step S205 in the embodiments illustrated in FIG. 2, which is not described herein any further.

During construction of the cost function, with respect to the marginalized residual term, a fourth data term can be obtained by multiplying the marginalized residual term by its transpose matrix. The cost function is then obtained by summing this fourth data term with the first data term, the second data term, and the third data term. The cost function in the embodiments is represented by Formula (2):

$$c\left(x\right) = \sum_{k=0}^{K-2} e_p^{k^T} W_p e_p^k + \sum_{k=0}^{K-2} e_s^{k^T} W_s e_s^k + \sum_{l} \sum_{j \in \beta_l} e_r^{l,j^T} W_r e_r^{l,j} + e_m^T e_m \qquad \text{Formula (2)}$$

In Formula (2), $e_m$ represents the marginalized residual term.

Similar to the embodiments illustrated in FIG. 2, the system state vector $x$ is calculated by minimizing Formula (2). The position estimate information of the lawnmower robot is then obtained by performing an integration process on the elements of the system state vector $x$, and the position estimate information is determined as the current position information of the lawnmower robot.

The method according to the embodiments, when localizing the lawnmower robot using data from multiple sensors, further considers the impact of the oldest or second-newest image frames on the localization. This impact is quantified as a marginalized residual term and added to the cost function. This ensures that the constraints imposed by the marginalized images and the related data on other frames are preserved during the overall optimization, while the marginalized data is no longer calculated. This, in turn, improves the localization speed while ensuring the accuracy of the localization results.

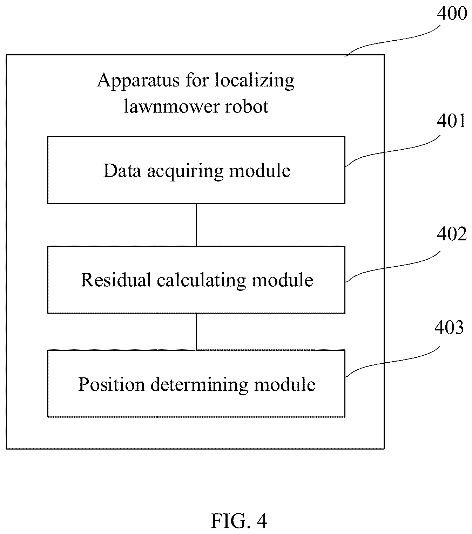

FIG. 4 is a schematic structural diagram of an apparatus 400 for localizing a lawnmower robot some embodiments of the present disclosure. Referring to FIG. 4, the apparatus 400 includes: a data acquiring module 401, configured to acquire wheel speedometer data and inertial positioning data of the lawnmower robot, and image data captured by an image sensing device disposed on the lawnmower robot; a residual calculating module 402, configured to: derive a first residual term based on the wheel speedometer data, derive a second residual term based on the inertial positioning data, calculate a visual reprojection error based on the image data and derive a third residual term based on the visual reprojection error; and a position determining module 403, configured to construct a cost function based on the first residual term, the second residual term, and the third residual term, and to determine current position information of the lawnmower robot by minimizing the cost function.

In some embodiments, the position determining module 403 is specifically configured to: determine a first weight, a second weight, and a third weight, wherein the first weight is related to the wheel speedometer data, the second weight is related to the inertial positioning data, and the third weight is related to the image data; derive a first data term based on the first residual term and the first weight, derive a second data term based on the second residual term and the second weight, and derive a third data term based on the third residual term and the third weight; and sum the first data term, the second data term, and the third data term to obtain the cost function.

In some embodiments, the residual calculating module 402 is specifically configured to: integrate the wheel speedometer data to obtain first position information, and derive the first residual term based on the first position information and an initial position estimate.

In some embodiments, the residual calculating module 402 is specifically configured to: pre-integrate the inertial positioning data to obtain second position information, and derive the second residual term based on the second position information and an initial position estimate.

In some embodiments, the residual calculating module 402 is specifically configured to: perform image recognition on the image data to identify an image containing a reference landmark and to determine an actual pixel position of the reference landmark in the image, wherein the reference landmark is a reference object within an operating area of the lawnmower robot; for the reference landmark, determine an estimated pixel position of the reference landmark in the image, and derive the visual reprojection error based on the estimated pixel position and the actual pixel position; and determine the visual reprojection error as the third residual term.

In some embodiments, the residual calculating module 402 is further configured to acquire a marginalized residual term.

The position determining module 403 is specifically configured to construct the cost function based on the first residual term, the second residual term, the third residual term, and the marginalized residual term.

In some embodiments, the position determining module 403 is specifically configured to: determine the first weight based on a noise covariance corresponding to a wheel speedometer of the lawnmower robot, determine the second weight based on a covariance of a pre-integration noise term of the inertial positioning data, and determine the third weight based on a noise covariance corresponding to the image sensing device on the lawnmower robot.

The apparatus according to the embodiments may be used to implement the technical solutions according to any of the above method embodiments. The implementation principles and technical effects are similar, which are not described herein any further for brevity.

Some embodiments of the present disclosure further provide an electronic device. The electronic device includes a memory and a processor. The memory is configured to store computer program instructions, and the processor is configured to execute the computer program instructions to perform the functional actions specified in the steps, or combination of steps, in the flowcharts of FIG. 2 and FIG. 3, thereby implementing the localization of the lawnmower robot.

Some embodiments of the present disclosure further provide a computer-readable medium (also referred to as a computer-readable storage medium), the computer-readable medium may be a computer-readable signal medium or a computer-readable storage medium. A processor in the computer reads computer program instructions stored in the computer-readable medium to execute the computer program instructions to perform the functional actions specified in the steps, or combination of steps, in the flowcharts of FIG. 2 and FIG. 3, thereby generating Apparatus for performing the functional actions specified in each block, or a combination of blocks, of a block diagram.

The computer-readable medium includes, but is not limited to, electronic, magnetic, optical, electromagnetic, or infrared memory, or a semiconductor system, apparatus, or device, or any suitable combination of the foregoing. The memory is configured to store program codes or instructions, where the program codes include computer operation instructions. The processor is configured to execute the program codes or instructions, stored in the memory, for the method for localizing the lawnmower robot.

For the definitions of the memory and the processor, reference may be made to the description in the foregoing embodiment of the computer device, which are not repeated herein.

In the several embodiments provided in this application, it should be understood that the disclosed system, device, and method may be implemented in other manners. For example, the foregoing described device embodiments are merely examples. For example, division into the modules or units is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the devices or modules may be implemented in electrical, mechanical, or other forms.

In addition, function units in embodiments of this application may be integrated into one processing unit, or each of the units may exist alone physically, or two or more units may be integrated into one unit. The integrated unit may be implemented in a form of hardware, or may be implemented in a form of software function unit.

When the integrated unit is implemented in the form of software function unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of software product. The software product is stored in a storage medium, and includes several instructions for instructing a device, for example, a single-chip microcomputer or a chip, or a processor, to perform all or some of the steps of the methods in embodiments of this application. The foregoing storage medium includes any medium that can store program code, such as a USB flash drive, a removable hard disk, a read-only memory (ROM), a random access memory (RAM), a magnetic disk, or an optical disc.

In the claims, any reference symbol between the brackets shall not constitute any limitation on the claims. The word "comprise" does not exclude existence of an element or a step that is not listed in the claims. The word "a/an" or "one" preceding an element does not exclude existence of multiple such elements. The present invention may be implemented by hardware including several different elements and a computer that is appropriately programmed. In unit claims that list several apparatuses, some of the apparatuses may be specifically implemented by a same hardware item. Use of words first, second, third, and the like does not indicate any sequence. These words may be interpreted as names. The steps in the above embodiments should not be construed as limiting the order of execution, unless otherwise specified.

In summary, it should be finally noted that the above-described embodiments are merely for illustration of the present disclosure, but are not intended to limit the present disclosure. Although the present disclosure is described in detail with reference to these embodiments, a person skilled in the art may also make various modifications to the technical solutions disclosed in the embodiments, or make equivalent replacements to a part of the technical features contained therein. Such modifications or replacements, made without departing from the principles of the present disclosure, shall fall within the scope of the present disclosure.

**Claims**

1. A method for localizing a lawnmower robot, comprising:

   acquiring wheel speedometer data and inertial positioning data of the lawnmower robot, and image data captured by an image sensing device disposed on the lawnmower robot;
   deriving a first residual term based on the wheel speedometer data;

deriving a second residual term based on the inertial positioning data;
calculating a visual reprojection error based on the image data;
deriving a third residual term based on the visual reprojection error;
constructing a cost function based on the first residual term, the second residual term, and the third residual term; and
determining current position information of the lawnmower robot by minimizing the cost function.

2. The method according to claim 1, wherein the constructing the cost function based on the first residual term, the second residual term, and the third residual term, and determining the current position information of the lawnmower robot by minimizing the cost function comprise:

determining a first weight, a second weight, and a third weight, wherein the first weight is related to the wheel speedometer data, the second weight is related to the inertial positioning data, and the third weight is related to the image data;
deriving a first data term based on the first residual term and the first weight;
deriving a second data term based on the second residual term and the second weight;
deriving a third data term based on the third residual term and the third weight; and
summing the first data term, the second data term, and the third data term to obtain the cost function.

3. The method according to claim 1, wherein the deriving the first residual term based on the wheel speedometer data comprises:

integrating the wheel speedometer data to obtain first position information; and
deriving the first residual term based on the first position information and an initial position estimate.

4. The method according to claim 1, wherein the deriving the second residual term based on the inertial positioning data comprises:

pre-integrating the inertial positioning data to obtain second position information; and
deriving the second residual term based on the second position information and an initial position estimate.

5. The method according to claim 1, wherein the calculating the visual reprojection error based on the image data and deriving the third residual term based on the visual reprojection error comprise:

performing image recognition on the image data to identify an image containing a reference landmark and to determine an actual pixel position of the reference landmark in the image, wherein the reference landmark is a reference object within an operating area of the lawnmower robot;
determining an estimated pixel position of the reference landmark in the image;
deriving the visual reprojection error based on the estimated pixel position and the actual pixel position; and
determining the visual reprojection error as the third residual term.

6. The method according to claim 1, wherein before constructing the cost function based on the first residual term, the second residual term, and the third residual term, the method further comprises:

acquiring a marginalized residual term;
wherein the constructing the cost function based on the first residual term, the second residual term, and the third residual term comprises: constructing the cost function based on the first residual term, the second residual term, the third residual term, and the marginalized residual term.

7. The method according to claim 2, wherein determining the first weight, the second weight, and the third weight comprises:

determining the first weight based on a noise covariance corresponding to a wheel speedometer of the lawnmower robot;
determining the second weight based on a covariance of a pre-integration noise term of the inertial positioning data; and
determining the third weight based on a noise covariance corresponding to the image sensing device on the lawnmower robot.

8. An apparatus for localizing a lawnmower robot, comprising:

   an acquiring module, configured to acquire wheel speedometer data and inertial positioning data of the lawnmower robot, and image data captured by an image sensing device disposed on the lawnmower robot;
   a residual calculating module, configured to: derive a first residual term based on the wheel speedometer data, derive a second residual term based on the inertial positioning data, and calculate a visual reprojection error based on the image data and derive a third residual term based on the visual reprojection error; and
   a position determining module, configured to construct a cost function based on the first residual term, the second residual term, and the third residual term, and to determine current position information of the lawnmower robot by minimizing the cost function.

9. An electronic device, comprising: a memory and a processor, wherein the memory stores a computer program, and the processor, when running the computer program, is caused to perform the steps of the method for localizing a lawnmower robot as defined in any one of claims 1 to 7.

10. A readable storage medium, storing a computer program thereon, wherein the computer program, when run by a processor, causes the processor to perform the steps of the method for localizing a lawnmower robot as defined in any one of claims 1 to 7.

FIG. 1

Acquire wheel speedometer data and inertial positioning data of the lawnmower robot, and image data captured by an image sensing device disposed on the lawnmower robot — S201

Derive a first residual term based on the wheel speedometer data — S202

Derive a second residual term based on the inertial positioning data — S203

Calculate a visual reprojection error based on the image data, and derive a third residual term based on the visual reprojection error — S204

Construct a cost function constructed based on the first residual term, the second residual term, and the third residual term, and determine current position information of the lawnmower robot by minimizing the cost function — S205

FIG. 2

Acquire wheel speedometer data and inertial positioning data of the lawnmower robot, and image data captured by an image sensing device disposed on the lawnmower robot — S301

Derive a first residual term based on the wheel speedometer data — S302

Derive a second residual term based on the inertial positioning data — S303

Calculate a visual reprojection error based on the image data, and deriving a third residual term based on the visual reprojection error — S304

Determine a marginalized residual term — S305

Construct a cost function based on the first residual term, the second residual term, the third residual term, and the marginalized residual term, and determine the current position information of the lawnmower robot by minimizing the cost function — S306

FIG. 3

400

Apparatus for localizing
lawnmower robot

401

Data acquiring module

402

Residual calculating module

403

Position determining module

FIG. 4

## INTERNATIONAL SEARCH REPORT

| International application No. |
|---|
| **PCT/CN2024/097469** |

| A. | CLASSIFICATION OF SUBJECT MATTER |
|---|---|

G01C21/00(2006.01)i; G01C21/16(2006.01)i; G01C21/20(2006.01)i

According to International Patent Classification (IPC) or to both national classification and IPC

| B. | FIELDS SEARCHED |
|---|---|

Minimum documentation searched (classification system followed by classification symbols)

IPC:G01C

Documentation searched other than minimum documentation to the extent that such documents are included in the fields searched

Electronic data base consulted during the international search (name of data base and, where practicable, search terms used)

CNTXT: WPABSC; CNKI; WPABS; ENTXT; ENTXTC; CJFD; VEN: 机器人, 定位, 残差, 权重, 重投影, 代价函数, 最小化, 图像, 惯性, IMU, 轮速, 边缘化, 协方差, robot, position, residual, weight, cost, minimize, image, inertial measurement unit, covariance

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116734840 A (YOUSI MEIDI (SHANGHAI) ROBOT TECHNOLOGY CO., LTD.) 12 September 2023 (2023-09-12)<br>description, paragraphs [0005]-[0041] | 1-10 |
| X | CN 114323002 A (ZHEJIANG UNIVERSITY) 12 April 2022 (2022-04-12)<br>description, paragraphs [0030]-[0048], and figures 1 and 2 | 1, 3-6, 8-10 |
| Y | CN 114323002 A (ZHEJIANG UNIVERSITY) 12 April 2022 (2022-04-12)<br>description, paragraphs [0030]-[0048], and figures 1 and 2 | 2, 7 |
| Y | CN 113436261 A (HUNAN UNIVERSITY et al.) 24 September 2021 (2021-09-24)<br>description, paragraphs [0007]-[0067] | 2, 7 |
| A | CN 115900700 A (ZHUHAI GREE ELECTRIC APPLIANCES INC.) 04 April 2023 (2023-04-04)<br>entire document | 1-10 |
| A | CN 113155140 A (SHANGHAI JIAO TONG UNIVERSITY) 23 July 2021 (2021-07-23)<br>entire document | 1-10 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 August 2024** | **03 September 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/097469** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 115493579 A (AGILE ROBOTICS (SHENZHEN) CO., LTD. et al.) 20 December 2022 (2022-12-20)<br>        entire document | 1-10 |
| A | US 2022292711 A1 (BEIJING TUSEN ZHITU TECHNOLOGY CO., LTD.) 15 September 2022 (2022-09-15)<br>        entire document | 1-10 |
| A | US 2023134569 A1 (BEIJING BAIDU NETCOM SCIENCE TECHNOLOGY CO., LTD.) 04 May 2023 (2023-05-04)<br>        entire document | 1-10 |

Form PCT/ISA/210 (second sheet) (July 2022)

**INTERNATIONAL SEARCH REPORT**
Information on patent family members

| International application No. |
| --- |
| **PCT/CN2024/097469** |

| Patent document<br>cited in search report | | | Publication date<br>(day/month/year) | Patent family member(s) | Publication date<br>(day/month/year) |
| --- | --- | --- | --- | --- | --- |
| CN | 116734840 | A | 12 September 2023 | None | |
| CN | 114323002 | A | 12 April 2022 | None | |
| CN | 113436261 | A | 24 September 2021 | None | |
| CN | 115900700 | A | 04 April 2023 | None | |
| CN | 113155140 | A | 23 July 2021 | None | |
| CN | 115493579 | A | 20 December 2022 | None | |
| US | 2022292711 | A1 | 15 September 2022 | None | |
| US | 2023134569 | A1 | 04 May 2023 | None | |

Form PCT/ISA/210 (patent family annex) (July 2022)

**EP 4 737 855 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 2023107496312